**Europäisches Patentamt**

**European Patent Office**

**Office européen des brevets**

(11) Numéro de publication: **0 322 313 B2**

(12) **NOUVEAU FASCICULE DE BREVET EUROPEEN**

(45) Date de publication de nouveau fascicule du brevet: **30.11.94**

(51) Int. Cl.5: **B65G 1/04**, B65G 37/00

(21) Numéro de dépôt: **88403270.7**

(22) Date de dépôt: **21.12.88**

(54) Dispositif d'extraction de bacs installés sur des rayonnages de part et d'autre d'une allée de circulation.

<table>
<tr><td>(30) Priorité: <b>23.12.87 FR 8718054</b></td><td>(73) Titulaire: <b>Compagnie Générale de Productique<br>98, rue d'Ambert<br>F-45000 Orléans (FR)</b></td></tr>
<tr><td>(43) Date de publication de la demande:<br><b>28.06.89 Bulletin 89/26</b></td><td rowspan="2">(72) Inventeur: <b>Coffre, Daniel<br>8, rue Saint-Nicolas<br>F-45550 Saint-Denis-de-L'Hotel (FR)</b><br>Inventeur: <b>Barbereau, Jean-Luc<br>21, rue Guillaume Apollinaire<br>F-45800 Saint Jean de Braye (FR)</b><br>Inventeur: <b>Gernez, Alain<br>18, rue Guy de Maupassant<br>F-45100 Orleans (FR)</b></td></tr>
<tr><td>(45) Mention de la délivrance du brevet:<br><b>02.01.92 Bulletin 92/01</b></td></tr>
<tr><td>(45) Mention de la décision<br>concernant l'opposition:<br><b>30.11.94 Bulletin 94/48</b></td></tr>
<tr><td>(84) Etats contractants désignés:<br><b>BE DE ES FR GB IT NL</b></td><td rowspan="2">(74) Mandataire: <b>Weinmiller, Jürgen et al<br>Lennéstrasse 9<br>Postfach 24<br>D-82336 Feldafing (DE)</b></td></tr>
<tr><td>(56) Documents cités:<br><b>EP-A- 0 136 189</b></td></tr>
</table>

**EP 0 322 313 B2**

# Description

La présente invention concerne un dispositif d'extraction de bacs installés sur des rayonnages de part et d'autre d'une allée de circulation.

Dans les unités de rangement comportant de tels dispositifs d'extraction, chaque dispositif est installé sur un translateur qui parcourt une allée de circulation et qui amène ce dispositifen face du bac à extraire ou en face d'un emplacement qui recevra le bac à stocker.

Ce dispositif réalise l'extraction des bacs par l'intermédiaire de manetons montés sur deux chaînes sans fin, s'engageant dans une glissière de préhension située en avant du bac. La remise en place des bacs est aussi assurée par les manetons qui agissent par poussée, soit sur la même glissière de préhension si le bac est remis en place du même côté de l'allée, soit sur la glissiére opposée si le bac est remis en place de l'autre côté de l'allée. Comme le dispositif d'extraction doit pouvoir circuler dans l'allée avec un bac en position centrale, il faut prévoir un jeu de circulation suffisant pour éviter une collision avec les bacs rangés sur les rayonnages.

Dans des dispositifs d'extraction connus, ce jeu de circulation est compensé au moyens d'une table qui porte l'ensemble chaîne-manetons et qui se déplace latéralement au moyen d'un moteur et d'un dispositif d'entraînement classique. Ces dispositifs exigent donc un moteur supplémentaire et engendrent des temps morts importants notamment quand le bac, extrait d'un côté de l'allée, doit être rangé de l'autre côté.

On connait, par le document US 4010855, un dispositif d'extraction qui compense le jeu de circulation par un déport de l'axe des manetons. Mais l'inconvénient d'un tel dispositif réside dans le fait que les bacs doivent avoir des dimensions très précises pour réaliser un partait alignement des bacs en vis à vis.

On connaît également, par le document EP 0136189, un dispositifd'extraction muni de deux chaînes sans fin, chaque chaîne comportant deux manetons. Ce dispositif présente une complexité mécanique importante car la trajectoire de chaque chaîne comporte des changements de courbure que nécessits l'emploi de six roues de guidage et/ou d'entraînement et qui limite la possibilité d'ancrage des manetons sur les chaînes. Cette faiblesse, au niveau de l'ancrage des manetons, limite la force que peut exercer la chaîne, et la capacité de charge d'un bac ne dépasse pas alors 100 Kgs environ. De plus, la vitesse d'attaque du maneton dans la glissière crée un choc important sur le bac car la vitesse de déplacement linéaire de celui-ci passe instantanément d'une vitesse nulle à une vitesse égale à celle du maneton.

La présente invention ne présente pas ces inconvénients car la chaîne décrit une courbe simple, uniformément convexe, qui permet d'avoir un solide ancrage des manetons et les bacs peuvent ainsi être plus lourdement chargés, la charge pouvant atteindre 300 Kgs et plus. Le dispositif de la présente invention permet également d'utiliser des bacs du commerce qui peuvent présenter des différences importantes dans leurs dimensions sans nuire à la bonne marche de l'installation, et elle permet de simplifier les programmes d'automatisme car le dispositif présente une symétrie parfaite.

La présente invention a pour objet un dispositif d'extraction de bacs installés sur des rayonnages de part et d'autre d'une allée de circulation et munis à leur deux extrémités d'une glissière de préhension, dispositif comportant au moins une chaîne sans fin munie de deux manetons s'engageant dans les glissières de préhension des bacs, les deux manetons d'une même chaîne étant engagés chacun dans une glissière de préhension d'un bac lorsque celui-ci est au milieu de l'allée, au dessus du dispositif d'extraction, caractérisé en ce que la trajectoire de chaque chaîne définit un domaine convexe.

Avantageusement, la largeur des deux glissières permet toujours l'introduction et la sortie des deux manetons d'une même chaîne sans coincement et sans temps mort car il y a toujours au moins un maneton actif, pousseur ou tireur, la largeur théorique d'une glissière étant égale à la somme du diamètre d'un maneton et d'un jeu maximal déterminé.

En outre, chaque maneton est monté sur un porte-maneton relié à une chaîne par l'intermédiaire de deux axes, un axe étant monté dans un orifice oblong pour permettre la prise de virage. Chaque porte-maneton comporte deux roulements de guidage latéral et un patin de guidage vertical qui s'engagent dans une glissière rectiligne pour assurer un guidage de la chaîne lors du tirage d'un bac.

Il est décrit ci-après, à titre d'exemple et en référence aux dessins annexés, le dispositif de l'invention muni de deux chaînes sans fin et de quatre manetons.

La figure 1 montre une vue de dessus du dispositif de l'invention, situé entre deux rangés de bacs.

La figure 2 montre, en vue agrandie et plus détaillée, un support maneton de la figure 1.

La figure 3 montre le même support-maneton selon III de la figure 2.

La figure 4 montre le même support-maneton selon IV de la figure 2.

Les figures 5 à 8 montrent les positions intéressantes des manetons lors de l'extraction ou de la remise en place d'un bac.

La figure 9 montre, schématiquement, une chaîne et ses deux manetons en position centrale, cette figure schématique donnant les dimensions et les angles caractéristiques qui permettent de déterminer la largeur d'une glissière.

La figure 10 montre une courbe donnant le déplacement relatif des manetons.

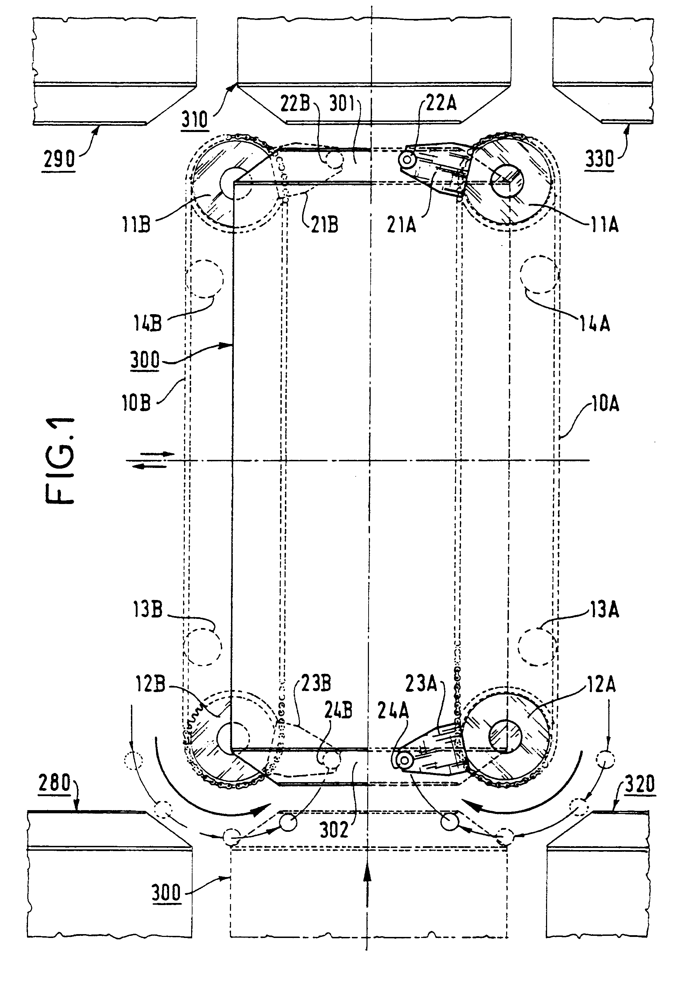

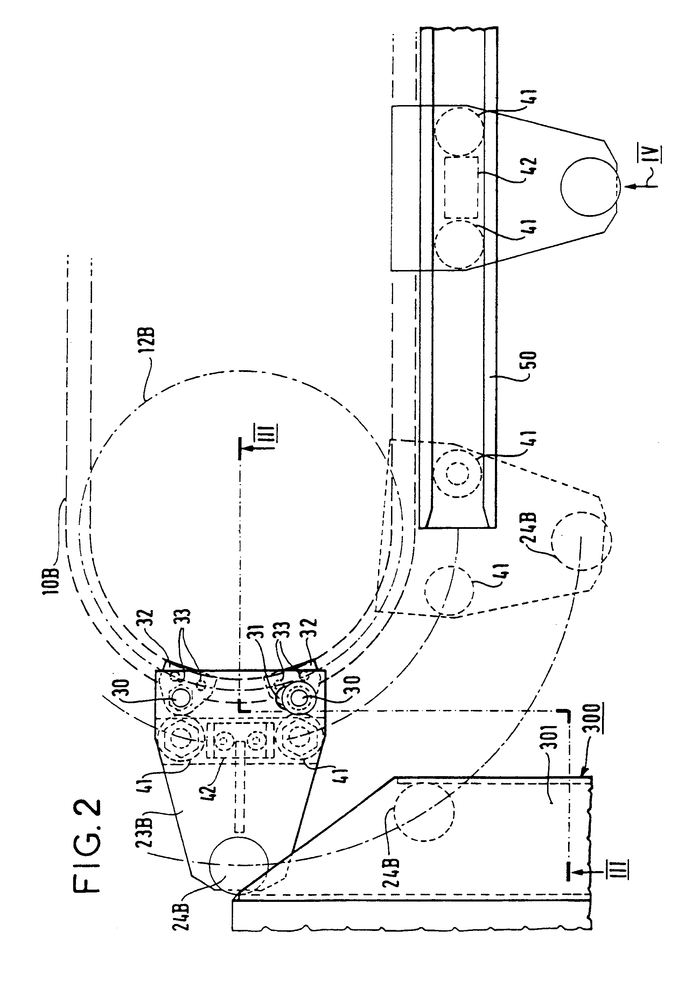

Dans la figure 1 montrant le dispositif de l'invention vu de dessus, sont représentées deux chaînes 10A, 10B munies chacune de deux supports-manetons 21A, 23A ; 21B, 23B et leur maneton associé 22A, 24A ; 22B,24B. Ces deux chaînes sont chacune entraînée par deux roues dentées 11A, 12A ; 11B, 12B et tendues par deux galets-tendeurs 13A, 14A ; 13B,14B. Elles sont également chacune guidée dans la partie rectiligne intérieure au chariot par un rail vu en figure 2. Bien entendu une seule chaîne et deux manetons suffiraient pour entraîner les bacs dans le cas de charges rigoureusement centrées.

L'exemple de réalisation décrit comporte deux chaînes et quatre manetons montés sur un chariot (non représenté) circulant dans une allée entre deux rangées de bacs, une rangée formée par les bacs..280, 300, 320.. et une autre rangée formée par les bacs..290, 310, 330.

Cet exemple montre la prise d'un bac, ici le bac 300, muni de ses deux glissières 301, 302.

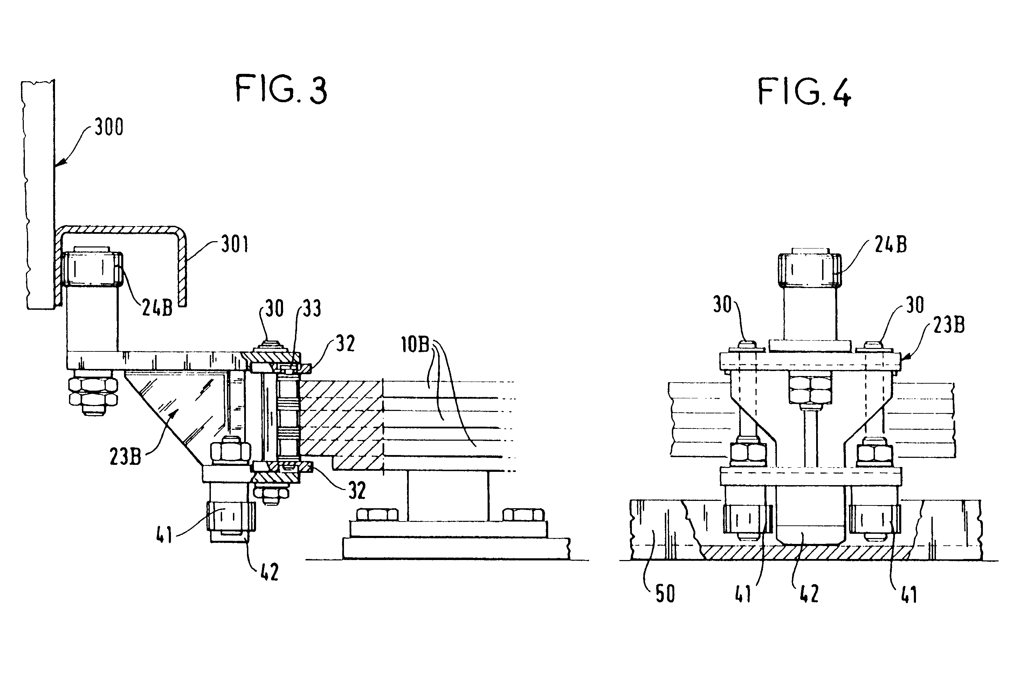

La trajectoire des manetons, représentée en traits interrompus, montre que les manetons 22A, 22B sont venus s'engager dans la glissière 301 pour amener le bac en position centrale sur le chariot, les manetons 24A, 24B s'étant engagés dans l'autre glissière de préhension 302 du bac 300. Quand ce bac 300 est situé au-dessus du chariot tel que cela est représenté en traits forts, prêt à être déplacé le long de l'allée, les manetons sont dans une position symétrique par rapport à l'axe de l'allée. Toutes les autres positions caractéristiques des manetons sont représentées dans les figures 4 à 8 décrites plus loin.

La figure 2 montre, de manière plus détaillée, un maneton, ici le maneton 24B, son entrée dans une glissière de préhension, ici la glissière 301 du bac 300, la fin de sa rotation et son entrée dans un rail de guidage 50. Ce rail de guidage, non représenté en figure 1, est installé dans la partie intérieure du chariot et bien entendu, un même rail de guidage est installé en vis à vis et guide l'autre chaîne 10A.

Le support maneton est fixé sur la chaîne par l'intermédiaire de quatre plaquettes 32, deux pa-quettes 32 en haut et deux plaquettes 32 en bas. La figure 3 montre clairement le montage des plaquettes directement sur quatre axes 33 des maillons de la chaîne, qui est, dans ce cas, une chaîne triple.

Cette figure 3 montre également le montage des supports-manetons sur les plaquettes à l'aide de deux axes 30. Deux plaquettes reliées par un même axe 30 comportent un trou oblong 31 (vu en figure 2) pour permettre le passage des supports-manetons sur les roues de chaînes donc dans les zones de virage.

La figure 4 montre le rail 50 et l'ensemble de guidage du support-maneton, cet ensemble étant constitué de deux galets 41 assurant un guidage latéral (comme cela est vu en figure 2) et un patin 42 qui porte au fond du rail 50 pour assurer un guidage vertical.

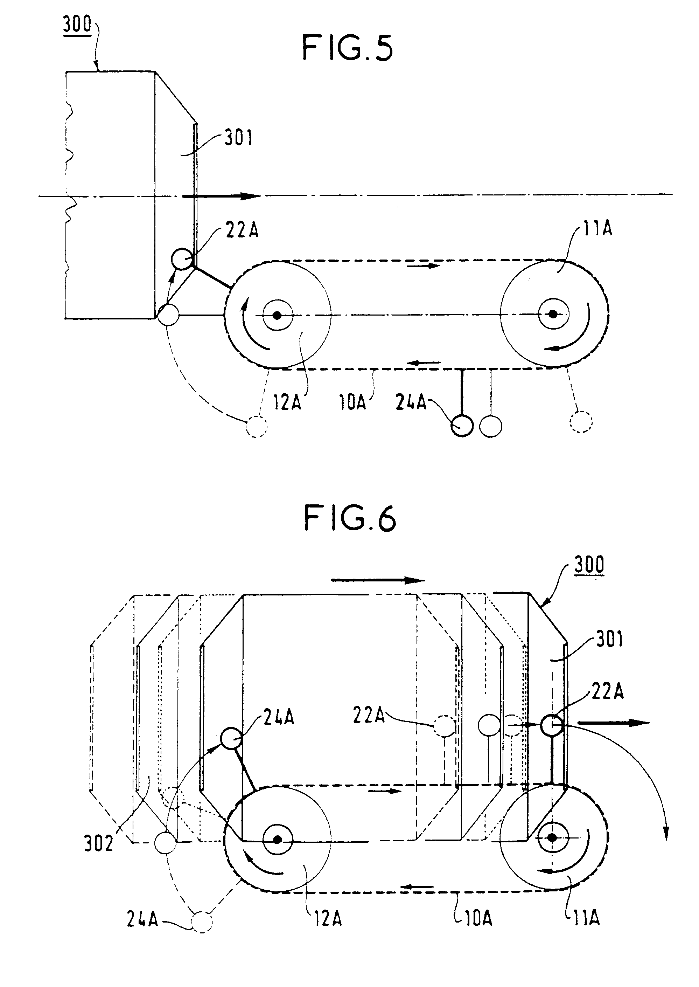

La figure 5 montre, en traits interrompus, la position centrale des manetons 22A, 24A permettant un déplacement du chariot à vide le long de l'allée sans accrocher les autres bacs ; en traits fins, la position d'engagement du maneton 22A dans la glissière de préhension 301, et en traits forts, la mise en mouvement du bac par le maneton 22A car celui-ci vient, à cet instant, au contact de la face avant de la glissière 301, ces deux dernières positions ayant déjà été montrées dans la figure 1.

La figure 6 montre, en traits interrompus, une position des manetons dans laquelle seul le maneton 22A entraîne le bac, en traits fins, l'engagement du maneton 24A dans la glissière amère 302 du bac tandis que le maneton 22A continue à tirer le bac, puis de nouveau en traits interrompus l'entrée du maneton 24A dans la glissière 302 et enfin, en traits forts la position dans laquelle l'écartement-des manetons est minimal, de sorte que le maneton 22A est au contact de la face avant de la glissière 301 et que le maneton 24A est au contact du bac, au jeu mécanique près.

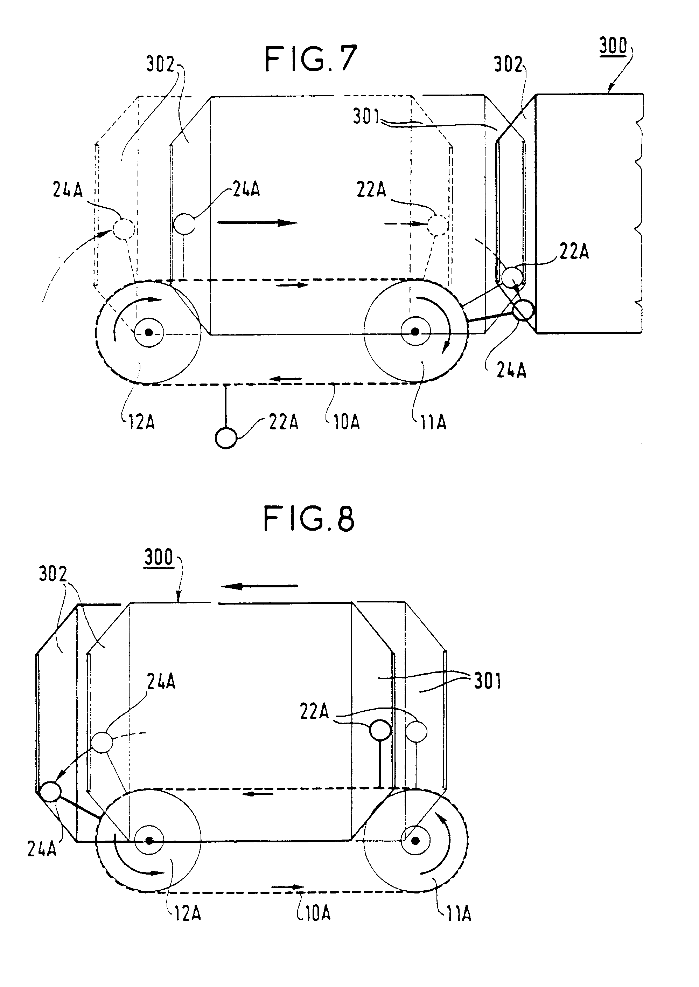

La figure 7 montre, en traits interrompus, la position centrale des manetons qui correspond à leur position vue en figure 1. C'est dans cette position des manetons que le chariot peut se déplacer dans l'allée sans risque d'accrochage car le glissière 302 est au même niveau que l'extérieur de la roue 12A.

La face avant de la glissière 301 est en retrait par rapport à la roue 11A et ce retrait correspond au jeu d'un maneton dans une glissière. En effet, si le bac provenait de l'autre côté de l'allée par une notation inverse des chaînes, les manetons seraient dans la même position mais le bac serait décalé, la face avant de la glissière 301 étant alors au niveau de l'extérieur de la roue 11A et la face avant de la glissière 302 en retrait par rapport à la roue 12A.

A partie de cette position centrale, en traits interrompus, deux mouvements du bac sont possibles.

En effet, lorsque le chariot a été amené en face d'une zone de déchargement située à gauche ou à droite de l'allée, il faut pouvoir déplacer le bac à droite ou à gauche de cette allée.

Dans le cas représenté en figure 7, en traits fins et en traits forts, la sortie du bac vers la droite s'effectue par un déplacement de la chaîne dans le même sens que celui des figures 5 et 6. La position représentée en traits fins, montre la fin de la poussée du maneton 22A sur la glissière 301, et la position représentée en traits forts montre la sortie du maneton 24A de la glissière 302, le bac étant alors en position sur le rayonnage.

Par une petite rotation supplémentaire, ces galets reprendront leur position initiale représentée en traits interrompus dans la figure 5.

Un tour complet des galets dans un seul sens (figures 5, 6 et 7) permet donc la préhension d'un bac d'un côté de l'allée et sa dépose de l'autre côté de l'allée.

Dans le cas représenté en figure 8, la sortie du bac vers la gauche, donc du même côté que sa préhension, s'effectue en inversant le sens de rotation de la chaîne.

La position en traits fins, montre, par rapport à la position en traits interrompus de la figure 7, une légère rotation en sens inverse qui rattrape le jeu des manetons dans les glissières. C'est alors le galet 24A qui tire et le galet 22A qui pousse.

La position en traits forts montre le dégagement du maneton 24A de la glissière 302, cette position correspondant à l'entrée du maneton 24A dans la glissière (figure 6, traits interrompus). Après le rattrapage du jeu dans la poignée, seul le maneton 22A poussera le bac sur le rayonnage.

Une rotation des galets sur environ un demi-tour (figures 5, 6 et 7 et traits interrompus, et une rotation inverse d'un demi-tour (figure 8) permettent le préhension d'un bac d'un côté de l'allée et sa dépose du même côté.

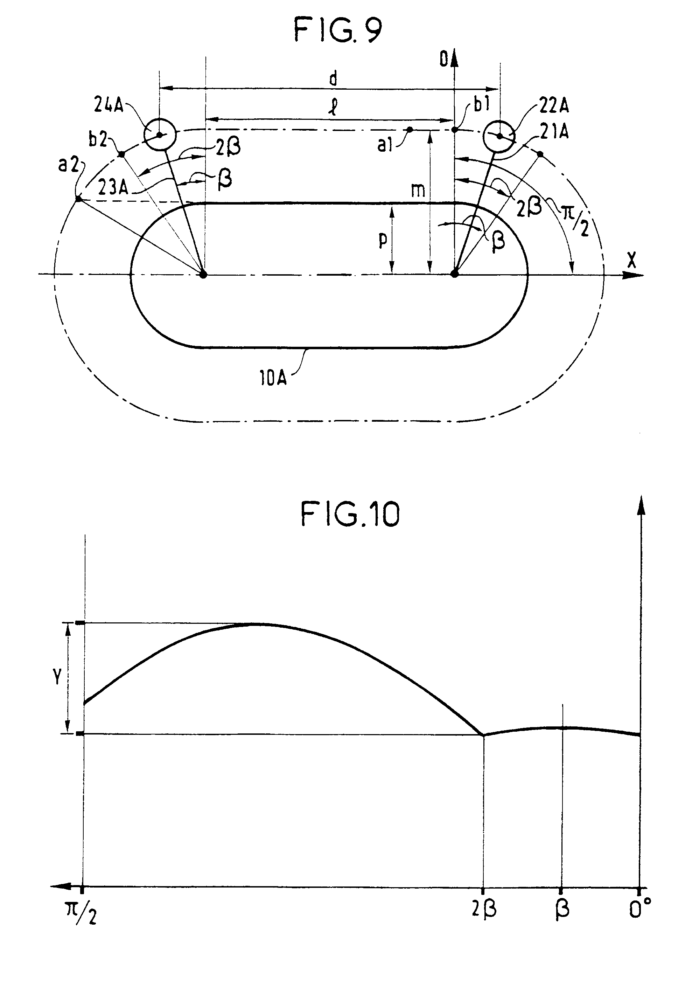

La figure 9 montre schématiquement deux manetons, les deux supports-manetons associés et une chaîne sans fin. Cette figure met en évidence la variation de la distance d entre les deux manetons, en fonction de la variation d'un angle $\alpha$ d'un support-maneton, l'autre support-maneton étant lié au premier par la chaîne. Les manetons, ici les manetons 22A, 24A de la chaîne 10A, sont dans cette figure placés symétriquement sur le chariot l'angle $\alpha$ d'inclinaison de chaque support-maneton 21A, 23A étant dans de cas identique et égal à un angle $\beta$.

- L'angle $2\beta$ du support-maneton 21A correspond à un angle nul du support-maneton 23A donc à une position de ce support-maneton 23A perpendiculaire à l'axe principal X.
- m est le rayon de la trajectoire courbe d'un maneton.
- $\ell$ est la distance entre l'axe des deux roues.

- p est le rayon de la trajectoire courbe d'une chaîne.

Pour un angle $\alpha$ dont $\beta > \alpha > 2\beta$

$$d = m \sin \alpha + \ell + m \sin (2\beta - \alpha)$$

Pour un angle $\alpha$ dont $2\beta > \alpha > \frac{\pi}{2}$.

$$d = m \sin \alpha + (\ell + 2p\beta) - p\alpha$$

La résolution de ces deux équations de déterminer les dimensions des bacs et de leurs glissières de préhension.

Les points caractéristiques sont les points a1, b1 pour le maneton 22A et a2, b2 pour le maneton 24A. L'écartement d des manetons est maximal quand le maneton 24A est au point a2 et que le maneton 22A est au point a1. Ceci correspond à la position représentée en traits forts dans la figure 8 et ceci détermine la côte à prévoir entre les deux glissières.

L'écartement des manetons est min mal quand le maneton 24A est au point b2 et le maneton 22A au point b1. Ceci correspond à la position représentée en traits forts dans la figure 6 et ceci détermine la côte à prévoir entre les faces internes du bac.

Bien entendu, vu la symétrie du dispositif, les écartements maximal et minimal se retrouve dans une autre position des manetons.

La figure 10 donne le déplacement relatif d'un maneton par rapport à l'autre. La côte Y représente le jeu à prévoir dans chaque glissière.

## Revendications

1. Dispositif d'extraction de bacs (280-330) installés sur des rayonnages de part et d'autre d'une allée de circulation et munis à leurs deux extrémités d'une glissière de préhension (301, 302), dispositif comportant au moins une chaîne sans fin (10A, 10B) munie de deux manetons (22A, 24A ; 22B, 24B) s'engageant dans les glissières des bacs, chaque maneton étant écarté radialement de la chaîne pour pouvoir s'engager dans une poignée d'un bac sans déplacement transversal, par rapport à l'allée, du dispositif, les deux manetons d'une même chaîne étant engagés chacun dans une glissière de préhension d'un bac lorsque celui-ci est au milieu de l'allée, au dessus du dispositif d'extraction, caractérisé en ce que la largeur des deux glissières permet toujours l'introduction et la sortie des deux manetons d'une même chaîne, sans coincement et sans temps mort, la trajectoire de chaque chaîne définissant un domaine convexe.

2. Dispositif selon la revendication 1, caractérisé en ce que la largeur théorique d'une glissière d'un bac est égale à la somme d'un diamètre d'un maneton et d'un jeu maximal (Y) déterminé.

3. Dispositif selon l'une des revendications 1 ou 2, caractérisé en ce que chaque maneton (22A, 24A ; 22B, 24B) est monté sur un support-maneton (21A, 23A ; 21B, 23B) relié à une chaîne par l'intermédiaire de deux axes (30), un axe étant monté dans un orifice oblong (31) pour permettre la prise de virage.

4. Dispositif selon la revendication 3, caractérisé en ce que chaque support-maneton comporte deux roulements de guidage (41) et un patin (42) qui s'engagent dans un rail rectiligne (50) pour assurer un guidage de la chaîne lors du tirage d'un bac.

## Claims

1. A device for extracting containers (280-330) installed on shelves on either side of a passage and provided at two ends with respective grasping slideways (301, 302), the device including at least one endless chain (10A, 10B) provided with two pins (22A, 24A; 22B, 24B) engaging in the slideways of the containers, each pin having a radial distance to the chain in order to be able to be coupled with a handle of a container without lateral displacement of the device with respect to the passage, the two pins of a single chain being engaged in respective ones of the grasping slideways of a container when the container is in the middle of the passage and over the extraction device, characterized in that the width of the two slideways always permits the introduction and extraction of the two pins of the same chain, without risk of jamming and without periods of inactivity, the path followed by each chain defining a convex area.

2. A device according to claim 1, characterized in that the theoretical width of a slideway of a container is equal to the sum of one pin diameter plus a determined maximum clearance (Y).

3. A device according to one of claims 1 or 2, characterized in that each pin (22A, 24A; 22B, 24B) is mounted on a pin support (21A, 23A; 21B, 23B) connected to a chain via two axes (30), one of the axes being mounted in an oblong orifice (31) to allow corners to be taken.

4. A device according to claim 3, characterized in that each pin support includes two guide wheels (41) and a skid (42) for engaging in a rectilinear rail (50) to guide the chain while it is pulling a container.

## Patentansprüche

1. Vorrichtung zur Entnahme von Kästen (280-330), die auf Regalen zu beiden Seiten eines Gangs installiert und an ihren beiden Enden mit einer Entnahmegleitschiene (301, 302) ausgestattet sind, wobei die Vorrichtung mindestens eine endlose Kette (10A, 10B) mit zwei Kurbelzapfen (22A, 24A; 22B, 24B) aufweist, die in die Gleitschienen der Kästen eingreifen, wobei jeder Kurbelzapfen einen radialen Abstand zur Kette aufweist, um ohne Querverschiebung der Vorrichtung in Bezug auf den Gang in einen Handgriff eines Kastens eingreifen zu können, wobei die beiden Kurbelzapfen derselben Kette jeweils in eine Entnahmegleitschiene eines Kastens eingreifen, wenn sich dieser in der Mitte des Gangs oberhalb der Entnahmevorrichtung befindet, dadurch gekennzeichnet, daß die Breite der beiden Gleitschienen immer die Einführung und die Entnahme der Kurbelzapfen einer Kette ohne Einklemmen und ohne Totzeit ermöglicht, und daß die Bewegungsbahn jeder Kette einen konvexen Bereich definiert.

2. Vorrichtung nach Anspruch 1, dadurch gekennzeichnet, daß die theoretische Breite einer Gleitschiene eines Kastens gleich der Summe eines Kurbelzapfendurchmessers und eines bestimmten maximalen Spiels (Y) ist.

3. Vorrichtung nach einem der Ansprüche 1 oder 2, dadurch gekennzeichnet, daß jeder Kurbelzapfen (22A, 24A; 22B, 24B) auf einer Kurbelzapfenstütze (21A, 23A; 21B, 23B) montiert ist, die mit einer Kette durch zwei Achsen (30) verbunden ist, wobei eine Achse in einem Längsloch (31) montiert ist, das eine Kurvenbahn ermöglicht.

4. Vorrichtung nach Anspruch 3, dadurch gekennzeichnet, daß jede Kurbelzapfenstütze zwei Führungswälzlager (41) und eine Kufe (42) aufweist, die in eine gerade Schiene (50) eingreifen, um die Führung der Kette während des Ziehens eines Kastens zu sichern.

FIG.1

FIG. 2

10B
12B
23B
24B
30
31
32
33
41
42
50
300
301
III
IV

FIG. 3

FIG. 4

# FIG.5

# FIG.6

# FIG.7

300

302

301

302

24A

24A

22A

22A

24A

12A 22A 10A 11A

# FIG.8

300

302

301

24A

22A

24A

12A 10A 11A

# FIG. 9

# FIG. 10